# EUROPEAN PATENT SPECIFICATION

(11) **EP 1 555 446 B1**
(45) Date of publication and mention of the grant of the patent: **21.06.2006**
(21) Application number: 04425014.0
(22) Date of filing: 15.01.2004
(51) Int. Cl.: F16C 29/02

(54) **Linear actuator**
Linearantrieb
Actuateur linéaire

(43) Date of publication of application: 20.07.2005
(73) Proprietor: SIR Societa Italiana Riduttori S.r.l., 36078 Valdagno (VI) (IT)
(72) Inventor: Battistella, Francesco, 36078 Valdagno VI (IT)
(74) Representative: Simino, Massimo

(56) References cited:
- EP-A- 1 035 355
- DE-B- 1 244 489
- DE-U- 20 015 831
- US-A- 3 923 280
- PATENT ABSTRACTS OF JAPAN vol. 0100, no. 44 (M-455), 21 February 1986 (1986-02-21) & JP 60 196461 A (MORITA TEKKOSHO:KK), 4 October 1985 (1985-10-04)

## Description

The present invention relates to a linear actuator, particularly a linear actuator for moving devices such as electrically adjustable armchairs, divans, orthopaedic beds, massaging back rests and the like.

There are known mechanical linear actuators operated by motors, usually electric motors, an actuator of this type consisting of a casing within which is formed a housing to accommodate a movable member which is axially slidable.

One end of the movable member projects from the casing so that it can be connected to one of the said devices which have to be moved.

In particular, there are known linear actuators in which the moving member is moved with respect to the casing by means of a threaded shaft which is connected to a male and female thread system, formed in the movable member, to provide a rotary movement about its own axis.

This rotary movement is produced by the electric motor, which is usually housed outside the casing. In particular, the electric motor is connected to the threaded shaft by means of suitable reduction or step-up gearing, and is also provided with power supply cables and limit sensors with an automatic stop system.

It is also known that a linear actuator only has to withstand axial loads, in other words end loads applied in a direction parallel to the movable member.

If non-axial forces are present, they must be supported by suitable guides or systems, but must not be allowed to bear on the movable member as this would give rise to noise, vibration and in some cases the jamming and breaking of the movable member itself.

The components of the linear actuator must therefore be made in accordance with detailed studies of the moving parts, with due consideration of the forces to which all the elements are subjected. The design and production of a linear actuator, particularly the movable components, must therefore be undertaken with the greatest possible mechanical precision in order to limit the play and leakage.

Clearly, this leads to an increase in the time and cost of the design and production of the components, and ultimately increases the price charged to the user.

Furthermore, it should be borne in mind that such a linear actuator requires frequent adjustment and/or maintenance operations during the service life of the linear actuator.

These maintenance operations are usually expensive both in terms of time and in economic terms, since they require the dismantling and replacement of the components of the linear actuator.

This is because, after a certain number of operating cycles, the movable components become worn as a result of the friction which is generated during their axial movements with respect to each other.

These operations require a greater or lesser period of inactivity of the linear actuator, with evident economic repercussions.

In view of the prior art which has been described, one object of the present invention is to provide a linear actuator which is free of the defects of the known actuators, but the primary object of the present invention is to provide a linear actuator in which the assembly and/or maintenance operations are less expensive both from the economic viewpoint and in terms of time.

According to the present invention, this object is achieved by means of a linear actuator as claimed in the independent claim (Claim 1).

The present invention makes it possible to produce a linear actuator in which any play and leakage can be eliminated by simple maintenance operations.

The characteristics and advantages of the present invention will be made clear by the following detailed description of a practical embodiment, illustrated by way of example and without restrictive intent in the attached drawings, in which:
Figure 1 shows a linear actuator in an exploded view, according to the present invention;
Figure 2 shows the linear actuator in a perspective view, complete with the motor and accessory members, according to the present invention;
Figure 3 is a sectional view taken through the line III-III of Figure 2;
Figures 4, 5 and 6 show a detail of the linear actuator according to the present invention, in a perspective view, in plan and in section respectively, the last of these being taken through the line VI-VI of Figure 5;
Figure 7 shows another detail of the linear actuator in a perspective view according to the present invention;
Figures 8, 9 and 10 show a further detail of the linear actuator according to the present invention, in a perspective view, in plan and in section respectively, the last of these being taken through the line X-X of Figure 9; and
Figure 11 shows another embodiment of the invention.

With reference to the cited figures, the linear actuator according to the present invention, indicated globally by the reference number 1, comprises a casing 2, in which is formed a housing 3 which accommodates a movable member 4. This movable member 4 can be driven in a manner known *per se* along its axis α-α.

The movement of the movable member 4 with respect to the casing 2 (or vice versa) can be produced, for example, by means of a threaded shaft 5 which is positioned coaxially within the housing 3. The said threaded shaft 5 is connected to a male and female thread system 6 formed axially in a support 32.

The threaded shaft 5 can be driven with a rotary motion about its axis by actuator means 8, comprising reduction (or step-up) gearing 7 and an electric motor 8A.

The electric motor 8A can be of any known type (and therefore will not be described in detail), and can be positioned either inside or outside the said casing 2.

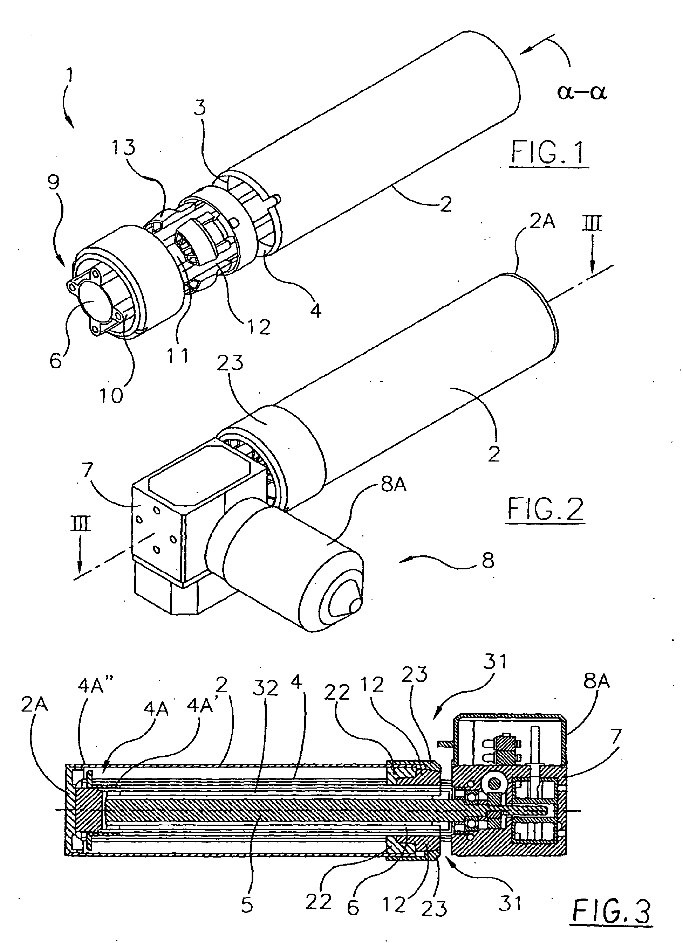

In the illustration in Figure 2, the electric motor 8A is associated externally with the said casing 2 in a known way.

The electric motor 8A imparts the rotary motion to the movable member 4 in ways which are known to persons skilled in the art and which will therefore not be described.

The casing 2 is closed at its lower end by a plug 2A which is made integral with fixing means 31 by means of screws (not shown in the figures).

In particular, fixing means 31 are fixed to the casing 2, for rotationally and translationally locking a plurality of blocks 12 to the casing 2.

In the present embodiment, the movable member 4 has a grooved profile 9 which forms teeth 10 which extend parallel to the longitudinal axis of the movable member 4 and along the whole length of the said movable member 4.

A plurality of grooves 11, acting as support surfaces for a plurality of blocks 12, are formed between the teeth 10.

In other words, the teeth 10 and the grooves 11 form guides in which the blocks 12 can slide.

In the specific embodiment illustrated, the number of blocks 12 is four, matching the number of grooves 11, but this number could be greater, for example five, six or eight, or smaller, for example two or three, according to the specific requirements to which the actuator must be adapted.

With particular reference to Figure 3, it will be noted that the movable member 4 has a sliding bearing 4A made integral with the grooved profile 9 by means of screws (not shown in the figures), the said bearing 4A consisting of a collar 4A' and a radial shoulder 4A".

The blocks 12 can be made either in sliding form or with revolving means, such as ball or roller recirculation means, to provide precision, reduced mechanical play, and ease of movement of the linear actuator 1 along the axis α-α.

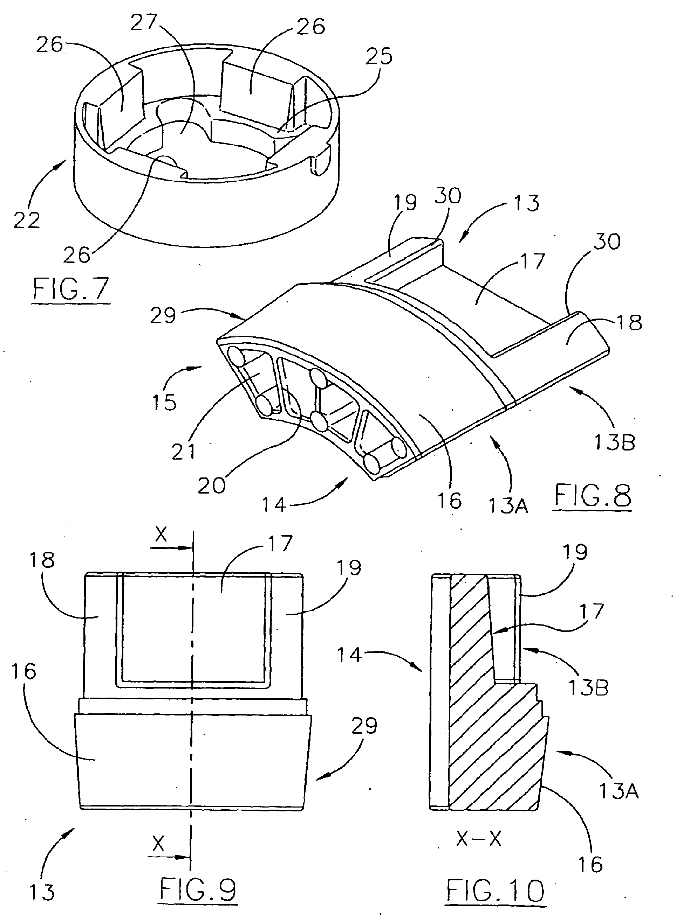

In the present embodiment, the blocks 12 are of the sliding type, and Figures 8, 9 and 10 show how each block of the said plurality of blocks 12 is shaped in the form of a sector of a circular ring, each having a substantially conical upper surface 13, a substantially smooth lower surface 14, a front surface 15 and lateral walls 29.

An inclined plane 16 is formed in the front portion 13A of the upper surface 13, while another inclined plane 17 is formed in the lower portion 13B of the said upper surface 13; in other words, two inclined planes 16 and 17 are provided in the opposing portions of the said upper surface 13.

The said planes 16 and 17 are inclined in the longitudinal direction α-α and their direction can be chosen at will.

It should be noted that the inclined plane 17 is delimited by a pair of edges 18 and 19.

In the front surface 15 a plurality of reinforcing ribs 20 will also be seen, these ribs forming a plurality of outlets 21 and being made in a manner known *per se*.

The lower surface 14 is shaped in such a way that the block 12 can be coupled to the corresponding groove 11 of the movable member 4.

Accordingly, as shown in Figure 1, the lower surface 14 of each of the said blocks 12 bears on the corresponding groove 11, thus guiding the movable member 4 in its axial movement.

Additionally, the lateral walls 29 (of each of the said blocks 12) bear on the walls of the said teeth 10, in such a way as to prevent the rotation of the said movable member 4 during the axial movement.

In particular, the fixing means 31 comprise a first axial stop 22 and a second axial stop 23, between which the blocks 12 are interposed.

In this particular embodiment, the first stop 22 is integral with the casing 2, while the second stop 23 is freely movable in the axial direction, for example by means of a threaded connection (not shown in the figures) between the said stop 23 and the casing 2.

Provision is also made for the adjustment of the distance in the longitudinal direction α-α between the first stop 22 and the second stop 23; in other words, the distance between the first and the second stop is variable.

An embodiment of the first axial stop 22 is shown in Figure 7.

This axial stop 22 is preferably, but not necessarily, force-fitted between the movable member 4 and the casing 2.

It has an annular shoulder 25 whose diameter is smaller than the diameter of the stop 22 itself.

It should also be noted that this annular shoulder 25 comprises a plurality of recesses 27.

The number of recesses 27 is equal to the number of teeth 10 formed on the movable member 4.

It should also be noted that a plurality of inclined planes 26 is formed on the shoulder 25, each of these planes being coupled in a complementary way to the corresponding inclined plane 17 present in the lower portion 13B of the upper surface 13 of the block 12.

With reference to Figure 8 again, it should be noted that the edges 18 and 19 of each of the said blocks 12 are made in such a way as to have guide means 30 for assisting the coupling to the said first axial stop 22.

Thus the correct alignment of the blocks 12 with respect to the first axial stop 22 is ensured, and the rotation of the movable member 4 is also prevented.

The block 12 can be made, for example, from a plastic material such as Teflon.

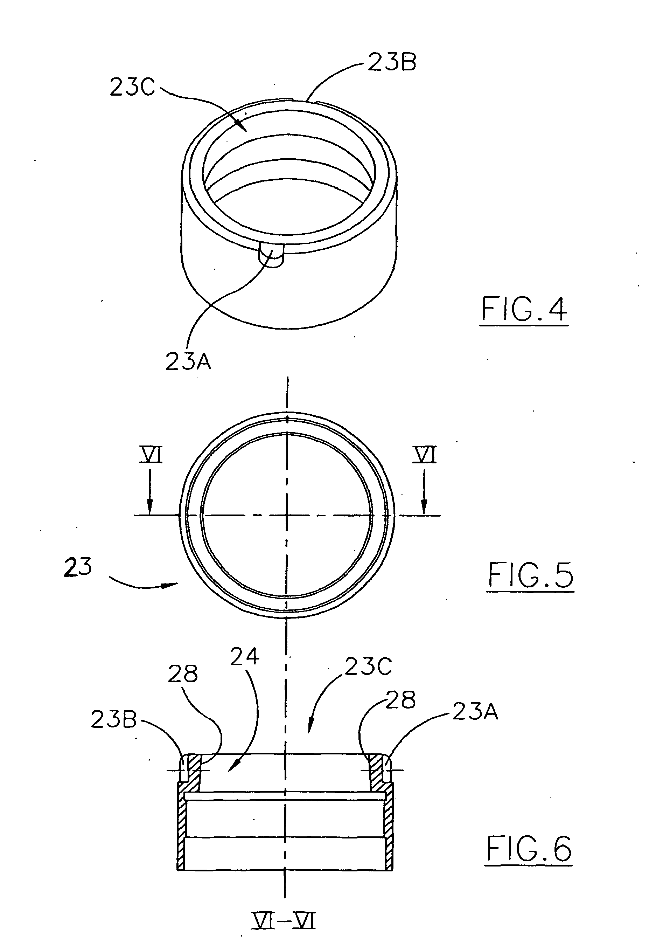

The axial actuator 1 according to the present invention additionally comprises a second axial stop 23, whose form of construction is shown in Figure 4.

This second axial stop 23 enables the components of the linear actuator to be secured once they have been assembled.

In this particular embodiment, the axial stop 23 is a threaded ring.

It should also be noted that the outer surface of the axial stop 23 has two notches 23A and 23B, which act as sockets for a suitable tool when the components of the linear actuator 1 have to be tightened or unscrewed, as described below.

With particular reference to Figure 6, it should be noted that the guiding face 23C of the said second axial stop 23 has an inner surface 24 whose section is conical. This is due to the fact that the diameter of the surface 24 is tapered towards the outside; in other words, the diameter progressively decreases towards the outside.

Thus, an inclined surface 28 is formed and is coupled in a complementary way to the inclined plane 16 present in the front portion 13A of the upper surface 13 of the block 12.

In other words, a positive coupling can be formed between the said first axial stop 22, the second axial stop 23 and the said plurality of blocks 12.

This coupling requires the presence of at least one of the two inclined planes 16 and 17.

Thus a wedge action is created between the blocks 12 and the movable member 4, which can eliminate any play in the coupling or any wear caused by use.

This is because, when the second axial stop 23 is screwed on to the casing 2, assuming that both inclined planes 16 and 17 are provided, this stop pushes the blocks 12 towards the inclined planes 26 of the first axial stop 22, thus enabling the blocks 12 to adhere uniformly to the grooves 11 of the movable member 4.

An increase in the tightening torque exerted on the axial stop 23 increases the action of the double wedge, thus advantageously controlling the friction which is generated between the blocks 12 and the grooves 11 of the movable member 4.

Thus the present invention provides a double advantage, in that the blocks 12 provide an optimal effect of guidance of the movable member 4 during the axial movement along the axis α-α, while ensuring that the movable member 4 cannot rotate.

These advantages will also be evident when the dimensions of the components of the linear actuator 1 change, for example when the blocks 12 have become worn.

This is because the linear actuator 1 according to the present invention enables the effects of the tolerances of the materials to be eliminated or significantly reduced by simple operations of tightening the axial stop 23.

If it is necessary to eliminate the play created between the lower surface 14 of the blocks 12 and the grooves 11 of the movable member 4 as a result of wear (this wear being due to the friction caused by the sliding of the said blocks with respect to the movable member), this play can easily be eliminated by a simple maintenance operation; it is simply necessary to tighten the axial stop 23 with a greater torque than that used previously, by means of a tool to be inserted in the sockets 23A and 23B provided for the purpose.

In this way, the action of the double wedge is enhanced, thus providing a closer coupling between the grooves 11 and the lower surface 14 and between the inclined planes 16 and 17 of the block 12 and the inclined planes 28 and 26 of the second axial stop 23 and of the first axial stop 22 respectively.

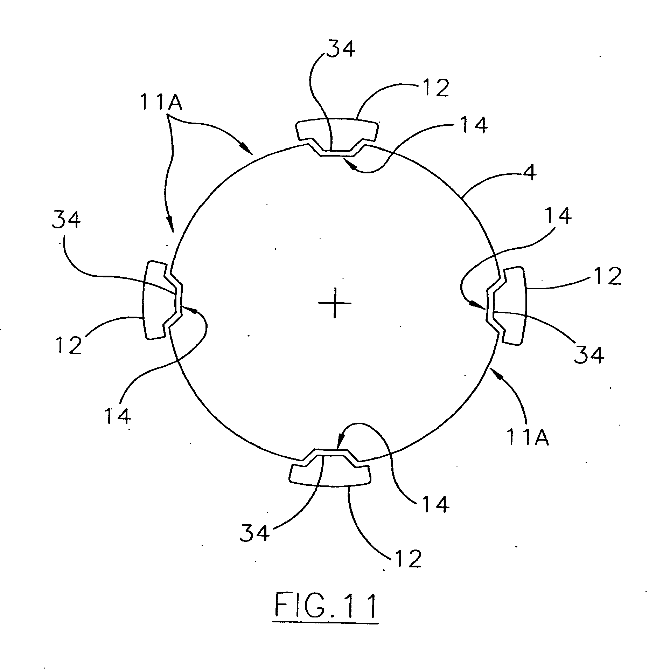

In another embodiment, shown in Figure 11, the movable member 4 has its grooved profile 9 provided with indentations 11A instead of projecting teeth 10.

Additionally, the lower surface 14 of the block 12 has a tooth 34 instead of being smooth.

A positive coupling is thus provided between the tooth 34 and the indentation 11A, to prevent the rotation of the block 12 while allowing the linear actuator 1 to move axially along the axis α-α.

Clearly, a person skilled in the art may makes numerous modifications and changes to the embodiment described above, in order to meet contingent and specific requirements, all such modifications and changes being included within the scope of protection of the invention as defined by the following claims.

## Claims

1. Linear actuator comprising:
- a casing (2);
- a movable member (4) supported slidably or by revolving means in the said casing (2) in such a way that one of its ends can project from the said casing (2) in a predetermined longitudinal direction (α-a), the said movable member (4) having a grooved profile (9);
- a plurality of blocks (12) interposed between the said casing (2) and the movable member (4), the said blocks (12) of the said plurality of blocks (12) being coupled by sliding engagement or by revolving means with the said grooved profile of the said movable member (4);
- fixing means (31) associated with the said casing (2) for rotationally and translationally locking the said plurality of blocks (12) to the casing (2);
- a shaft (5) extending in the said longitudinal direction (α-α) and associated with the said movable member (4) in such a way as to rotate about its own axis and to be axially fixed along the said predetermined longitudinal direction (α-α);
- support means (32) for providing a male and female thread connection between the shaft (5) and the movable member (4), a rotation of the shaft (5) about its axis corresponding to an axial movement of the movable member (4) with respect to the casing (2), and
- motor means (8) for rotating the said shaft (5),
**characterized in that**:
- the said fixing means (31) comprise a first and a second axial stop (22, 23) between which are interposed the blocks of the said plurality of blocks (12), the distance in the said longitudinal direction (α-α) between the said first and second stop (22, 23) being adjustable, and
- the coupling between the said first and second stop (22, 23) and at least one block of the said plurality of blocks (12) is made on at least one inclined plane (16), thus producing a wedging action of the said block (12) on the movable member (4), to eliminate any play in the coupling.

2. Linear actuator according to Claim 1, **characterized in that** the said first axial stop (22) is translationally fixed with respect to the casing (2) while the said second axial stop (23) is movable with respect to the said casing (2) in the said longitudinal direction (α-α), to enable the distance from the first stop (22) to be adjusted.

3. Linear actuator according to Claim 2, **characterized in that** the said first axial stop (22) is inserted by force-fitting in the said casing (2).

4. Linear actuator according to Claim 2, **characterized in that** the said second axial stop (23) is a threaded ring mating with a corresponding thread of the casing (2), a rotation of the said ring (23) with respect to the casing (2) corresponding to an axial movement of the ring with respect to the casing (2).

5. Linear actuator according to Claim 4, **characterized in that** the said threaded ring (23) forms a closing element of one end of the said casing (2).

6. Linear actuator according to Claim 1, **characterized in that** each block of the said plurality of blocks (12) comprises the said at least one inclined plane (16).

7. Linear actuator according to Claim 1 or 5, **characterized in that** each block of the said plurality of blocks (12) comprises a second, opposing inclined plane (17).

8. Linear actuator according to Claims 6 and 7, **characterized in that** the said first (16) and second (17) planes are inclined in the longitudinal direction (α-α) of the movable member (4).

9. Linear actuator according to Claim 7, **characterized in that** the said first inclined plane (16) and the said second inclined plane (17) are positioned at opposing end portions (13A, 13B) of each block (12) with respect to the longitudinal direction (α-α).

10. Linear actuator according to Claim 7, **characterized in that** the said first inclined plane (16) is coupled to a complementary inclined plane (28) of the said second axial stop (23).

11. Linear actuator according to Claim 7, **characterized in that** the second inclined plane (17) is coupled to a complementary inclined plane (26) formed in an annular shoulder (25) of the said first axial stop (22).

12. Linear actuator according to Claim 1, **characterized in that** the said grooved profile (9) comprises a plurality of teeth (10) separated by grooves (11).

13. Linear actuator according to Claim 1, **characterized in that** the said grooved profile (9) comprises a plurality of indentations (11A).

14. Linear actuator according to Claims 1 and 13, **characterized in that** the said plurality of blocks (12) comprise on their lower surfaces (14) teeth (34) for coupling with a positive coupling to the said plurality of indentations.

15. Linear actuator according to any one of the preceding claims, **characterized in that** the said operating means (8) comprise an electric motor (8A) and reduction gearing (7).

16. Linear actuator according to any one of the preceding claims, **characterized in that** the said support means (32) comprise an annular element extending coaxially with the said shaft (5) along the said longitudinal direction (α-α).

17. Linear actuator according to Claim 16, **characterized in that** the said support means (32) are fixed to the said casing (2) by a plurality of screws.

## Patentansprüche

1. Linearaktuator, umfassend:
- ein Gehäuse (2);
- ein bewegliches Glied (4), welches gleitbeweglich oder durch Rotationsmittel in dem Gehäuse (2) gehalten ist, derart, dass eines seiner Enden in einer vorgegebenen Longitudinalrichtung (α-α) von dem Gehäuse (2) vorstehen kann, wobei das bewegliche Glied (4) ein Nutprofil (9) aufweist;
- eine Mehrzahl von Blöcken (12), welche zwischen das Gehäuse (2) und das bewegliche Glied (4) geschaltet sind, wobei die Blöcke (12) der Mehrzahl von Blöcken (12) durch Gleitkontakt oder durch Rotationsmittel mit dem Nutprofil des beweglichen Gliedes (4) gekoppelt sind;
- dem Gehäuse (2) zugeordnete Fixiermittel (31) zum rotatorischen und translatorischen Feststellen der Mehrzahl von Blöcken (12) zum Gehäuse (2);
- eine Welle (5), die sich in der Longitudinalrichtung (α-α) erstreckt und dem beweglichen Glied (4) zugeordnet ist, derart, dass sie um ihre eigene Achse rotiert und entlang der vorgegebenen Longitudinalrichtung (α-α) axial fixiert ist;
- Haltemittel (32) zum Bereitstellen einer männlichen und weiblichen Gewindeverbindung zwischen der Welle (5) und dem beweglichen Glied (4), wobei eine Rotation der Welle (5) um ihre Achse zu einer Axialbewegung des beweglichen Gliedes (4) bezüglich des Gehäuses (2) korrespondiert, und
- Motormittel (8) zum Drehen der Welle (5),
**dadurch gekennzeichnet,**
- **dass** die Fixiermittel (31) eine erste und eine zweite axiale Stopvorrichtung (22, 23) umfassen, zwischen denen die Blöcke der Mehrzahl von Blöcken (12) geschaltet sind, wobei die Distanz zwischen der ersten und der zweiten Stopvorrichtung (22, 23) in der Longitudinalrichtung (α-α) einstellbar ist, und
- **dass** die Kopplung zwischen der ersten und der zweiten Stopvorrichtung (22, 23) und mindestens einem Block der Mehrzahl von Blöcken (12) auf mindestens einer geneigten Ebene (16) realisiert wird, um so eine Keilwirkung zwischen dem Block (12) und dem beweglichen Glied (4) zu erzeugen, um jegliches Spiel der Kopplung zu eliminieren.

2. Linearaktuator nach Anspruch 1, **dadurch gekennzeichnet, dass** die erste axiale Stopvorrichtung (22) bezüglich des Gehäuses (2) translatorisch fixiert ist, während die zweite axiale Stopvorrichtung (23) bezüglich des Gehäuses (2) in der Longitudinalrichtung (α-α) beweglich ist, um die Distanz von der ersten Stopvorrichtung (22) einstellen zu können.

3. Linearaktuator nach Anspruch 2, **dadurch gekennzeichnet, dass** die erste axiale Stopvorrichtung (22) mit Presssitz in dem Gehäuse (2) gefügt ist.

4. Linearaktuator nach Anspruch 2, **dadurch gekennzeichnet, dass** die zweite axiale Stopvorrichtung (23) ein Gewindering ist, der mit einem korrespondierenden Gewinde des Gehäuses (2) zusammenpasst, wobei eine Rotation des Rings (23) bezüglich des Gehäuses (2) zu einer Axialbewegung des Rings bezüglich des Gehäuses (2) korrespondiert.

5. Linearaktuator nach Anspruch 4, **dadurch gekennzeichnet, dass** der Gewindering (23) ein Abschlusselement eines Endes des Gehäuses (2) bildet.

6. Linearaktuator nach Anspruch 1, **dadurch gekennzeichnet, dass** jeder Block der Mehrzahl von Blöcken (12) die mindestens eine geneigte Ebene (16) umfasst.

7. Linearaktuator nach Anspruch 1 oder 5, **dadurch gekennzeichnet, dass** jeder Block der Mehrzahl von Blöcken (12) eine zweite, gegenüberliegende geneigte Ebene (17) umfasst.

8. Linearaktuator nach Anspruch 6 und Anspruch 7, **dadurch gekennzeichnet, dass** die erste Ebene (16) und die zweite Ebene (17) in der Longitudinalrichtung (α-α) des beweglichen Gliedes (4) geneigt sind.

9. Linearaktuator nach Anspruch 7, **dadurch gekennzeichnet, dass** die erste geneigte Ebene (16) und die zweite geneigte Ebene (17) in gegenüberliegenden Endbereichen (13A, 13B) jedes Blocks (12) bezüglich der Longitudinalrichtung (α-α) positioniert sind.

10. Linearaktuator nach Anspruch 7, **dadurch gekennzeichnet, dass** die erste geneigte Ebene (16) an eine komplementäre geneigte Ebene (28) der zweiten axialen Stopvorrichtung (23) gekoppelt ist.

11. Linearaktuator nach Anspruch 7, **dadurch gekennzeichnet, dass** die zweite geneigte Ebene (17) an eine komplementäre geneigte Ebene (26) gekoppelt ist, welche in einer ringförmigen Schulter (25) der ersten axialen Stopvorrichtung (22) gebildet ist.

12. Linearaktuator nach Anspruch 1, **dadurch gekennzeichnet, dass** das Nutprofil (9) eine Mehrzahl von Zähnen (10) umfasst, die durch Nuten (11) getrennt sind.

13. Linearaktuator nach Anspruch 1, **dadurch gekennzeichnet, dass** das Nutprofil (9) eine Mehrzahl von Vertiefungen (11A) umfasst.

14. Linearaktuator nach Anspruch 1 und Anspruch 13, **dadurch gekennzeichnet, dass** die Mehrzahl von Blöcken (12) an ihren unteren Flächen (14) Zähne (34) zum Koppeln mit positiver Kopplung an die Mehrzahl von Vertiefungen umfasst.

15. Linearaktuator nach einem der vorstehenden Ansprüche, **dadurch gekennzeichnet, dass** die Betriebsmittel (8) einen Elektromotor (8A) und ein Reduktionsgetriebe (7) umfassen.

16. Linearaktuator nach einem der vorstehenden Ansprüche, **dadurch gekennzeichnet, dass** die Haltemittel (32) ein ringförmiges Element umfassen, welches sich koaxial mit der Welle (5) entlang der Longitudinalrichtung (α-α) erstreckt.

17. Linearaktuator nach Anspruch 16, **dadurch gekennzeichnet, dass** die Haltemittel (32) mittels einer Mehrzahl von Schrauben an dem Gehäuse (2) fixiert sind.

## Revendications

1. Dispositif d'actionnement linéaire comportant :
- un boîtier (2);
- un élément mobile (4) supporté de façon coulissante ou par des moyens rotatifs dans ledit boîtier (2) d'une manière telle qu'une de ses extrémités peut dépasser dudit boîtier (2) dans une direction longitudinale prédéterminée (α-α), ledit élément mobile (4) ayant un profil rainuré (9);
- une multiplicité de blocs (12) interposés entre ledit boîtier (2) et l'élément mobile (4), lesdits blocs (12) de ladite multiplicité de blocs (12) étant reliés par engagement coulissant ou par des moyens rotatifs au dit profil rainuré dudit élément mobile (4);
- des moyens de fixation (31) associés au dit boîtier (2) afin de bloquer en rotation et en translation ladite multiplicité de blocs (12) sur le boîtier (2);
- un arbre (5) s'étendant dans ladite direction longitudinale prédéterminée (α-α) et associé au dit élément mobile (4) de manière à tourner autour de son propre axe et afin d'être fixé axialement le long de ladite direction longitudinale prédéterminée (α-α);
- des moyens de support (32) destinés à procurer une liaison filetée mâle et femelle entre l'arbre (5) et l'élément mobile (4), une rotation de l'arbre (5) autour de son axe correspondant à un mouvement axial de l'élément mobile (4) par rapport au boîtier (2), et
- des moyens de moteur (8) destinés à entraîner en rotation ledit arbre (5),
**caractérisé en ce que** :
- lesdits moyens de fixation (31) comportent une première et une deuxième butée axiale (22, 23) entre lesquelles sont interposées les blocs de ladite multiplicité de blocs (12), la distance dans ladite direction longitudinale (α-α) entre lesdites première et deuxième butées (22, 23) étant réglable, et
- l'accouplement entre lesdites première et deuxième butées (22, 23) et au moins un bloc de ladite multiplicité de blocs (12) est réalisé sur au moins un plan incliné (16), en produisant ainsi une action de coincement dudit bloc (12) sur l'élément mobile (4), afin d'éliminer tout jeu dans l'accouplement.

2. Dispositif d'actionnement linéaire selon la revendication 1, **caractérisé en ce que** ladite première butée axiale (22) est fixée en translation par rapport au boîtier (2) alors que ladite deuxième butée axiale (23) est mobile par rapport au dit boîtier (2) dans ladite direction longitudinale (α-α), afin de permettre à la distance par rapport à la première butée (22) d'être ajustée.

3. Dispositif d'actionnement linéaire selon la revendication 2, **caractérisé en ce que** ladite première butée axiale (22) est insérée par un ajustement à force dans ledit boîtier (2).

4. Dispositif d'actionnement linéaire selon la revendication 2, **caractérise en ce que** ladite deuxième butée axiale (23) est une bague filetée correspondant à un filet correspondant du boîtier (2), une rotation de ladite bague (23) par rapport au boîtier (2) correspondant à un mouvement axial de la bague par rapport au boîtier (2).

5. Dispositif d'actionnement linéaire selon la revendication 4, **caractérisé en ce que** ladite bague filetée (23) forme un élément de fermeture d'une extrémité dudit boîtier (2).

6. Dispositif d'actionnement linéaire selon la revendication 1, **caractérisé en ce que** chaque bloc de ladite multiplicité de blocs (12) comprend ledit au moins un plan incliné (16).

7. Dispositif d'actionnement linéaire selon la revendication 1 ou 5, **caractérisé en ce que** chaque bloc de ladite multiplicité de blocs (12) comprend un deuxième plan incliné opposé (17).

8. Dispositif d'actionnement linéaire selon les revendications 6 et 7, **caractérisé en ce que** lesdits premier (16) et deuxième (17) plans inclines sont inclinés dans la direction longitudinale (α-α) de l'élément mobile (4).

9. Dispositif d'actionnement linéaire selon la revendication 7, **caractérisé en ce que** ledit premier plan incliné (16) et ledit deuxième plan incliné (17) sont positionnés au niveau de parties d'extrémité opposées (13A, 13B) de chaque bloc (12) par rapport à la direction longitudinale (α-α).

10. Dispositif d'actionnement linéaire selon la revendication 7, **caractérisé en ce que** ledit premier plan incliné (16) est relié à un plan incliné complémentaire (28) de ladite deuxième butée axiale (23).

11. Dispositif d'actionnement linéaire selon la revendication 7, **caractérisé en ce que** le deuxième plan incliné (17) est relié à un plan incliné complémentaire (26) formé dans un épaulement annulaire (25) de ladite première butée axiale (22).

12. Dispositif d'actionnement linéaire selon la revendication 1, **caractérisé en ce que** ledit profil rainuré (9) comprend une multiplicité de dents (10) séparées par des rainures (11).

13. Dispositif d'actionnement linéaire selon la revendication 1, caractirité en ce que ledit profil rainuré (9) comprend une multiplicité de stries (11A).

14. Dispositif d'actionnement linéaire selon les revendications 1 et 13, **caractérisé en ce que** ladite multiplicité de blocs (12) comprend sur leurs surfaces inférieures (14) des dents (34) pour l'accouplement avec un accouplement positif sur ladite multiplicité de stries.

15. Dispositif d'actionnement linéaire selon l'une quelconque des revendications précédentes, **caractérisé en ce que** lesdits moyens d'actionnement (8) comprennent un moteur électrique (8A) et un réducteur (7).

16. Dispositif d'actionnement linéaire selon l'une quelconque des revendications précédentes, **caractérisé en ce que** lesdits moyens de support (32) comportent un élément annulaire s'étendant coaxialement au dit arbre (5) le long de ladite direction longitudinale (α-α).

17. Dispositif d'actionnement linéaire selon la revendication 16, **caractérisé en ce que** lesdits moyens de support (32) sont fixée sur ledit boîtier (2) par une multiplicité de vis.
